# EUROPEAN PATENT APPLICATION

(11) **EP 4 311 016 A1**
(43) Date of publication of application: **24.01.2024**
(21) Application number: 23753096.9
(22) Date of filing: 07.02.2023
(51) Int. Cl.: H01M 50/553, H01M 50/55, H01M 50/342, H01M 50/15, H01M 50/103

(54) **SECONDARY BATTERY HAVING IMPROVED TERMINAL STRUCTURE**

(30) Priority: 09.02.2022 KR 20220017171
(71) Applicant: LG ENERGY SOLUTION, LTD., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/001683
(87) International publication number: WO 2023/153746

(57) **Abstract**

The disclosed invention relates to a secondary battery including a positive electrode terminal and a negative electrode terminal disposed apart from each other on an upper surface of a battery case, and a terminal structure including a terminal body part and a terminal extension part, where the terminal structure surrounds the positive electrode terminal or the negative electrode terminal such that the positive electrode terminal or the negative electrode terminal is not exposed, and is coupled to the upper surface of the battery case and one or more surfaces connected to the upper surface, and the terminal extension part is electrically connected to the positive electrode terminal or the negative electrode terminal and is exposed at any one surface of the terminal body excluding an upper surface thereof.

## Description

### [Technical Field]

The present invention relates to a secondary battery having a terminal structure that allows for an arrangement of a positive electrode terminal and/or a negative electrode terminal to be easily changed.

This application claims the benefit of priority based on Korean Patent Application No. 10-2022-0017171 filed on February 09, 2022, and all contents disclosed in the literature of the Korean Patent Application are included as part of this specification.

### [Background Technology of the Invention]

Secondary batteries are rechargeable unlike primary batteries, and due to the possibility of compact size and high capacity, a lot of research on secondary batteries is being carried out. Due to developments in this technology, an increase in demand for mobile devices, and the emergence of electric vehicles and energy storage systems to address environmental concerns of the times, the demand for secondary batteries as energy sources is more rapidly increasing.

Secondary batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which electrodes and a separator are stacked.

An electrode assembly may be approximately classified into: a jelly-roll type electrode assembly, in which a separator is interposed between a positive electrode and a negative electrode, each of which is provided in the form of a sheet coated with an active material, and then, the positive electrode, the separator, and the negative electrode are wound; a stack type electrode assembly, in which a plurality of positive and negative electrodes with a separator interposed therebetween are sequentially stacked; and a stack/folding type electrode assembly, in which stack type unit cells are wound with a separation film having a long length.

Among the various types of secondary batteries, many of the prismatic secondary batteries have a positive electrode terminal and a negative electrode terminal disposed together on one surface, or one positive electrode terminal and one negative electrode terminal are each disposed on one of two surfaces facing each other. An arrangement of the positive and negative electrode terminals is determined by design specifications of various devices on which prismatic secondary batteries are mounted. Even in the same form factor, it is necessary to separately design the arrangement structure of the positive and negative electrode terminals for each design specification which can be time consuming and result in additional costs.

### [Related Art Documents]

(Patent document 1) Korean Patent Publication No. 10-2019-0102816 (published on September 4, 2019)

### [Description of the Invention]

### [Technical Problem]

The present invention is directed to providing a new prismatic secondary battery capable of easily changing an arrangement of a positive electrode terminal and a negative electrode terminal provided in a prismatic secondary battery without having to change the design of the prismatic secondary battery.

### [Technical Solution]

The present invention relates to a secondary battery including: a positive electrode terminal and a negative electrode terminal disposed apart from each other on an upper surface of a battery case; and a terminal structure including a terminal body part and a terminal extension part, wherein the terminal structure covers at least one of the positive electrode terminal and the negative electrode terminal such that the respective positive electrode terminal or the negative electrode terminal is not exposed, wherein the terminal structure is coupled to an upper surface of the battery case and one or more side surfaces connected to the upper surface, and wherein the terminal extension part is electrically connected to the at least one of the positive electrode terminal and the negative electrode terminal, and is exposed at any one or more side surfaces of the terminal body part except the upper surface.

In one exemplary embodiment, the battery case may be a hexahedral battery case.

In addition, the secondary battery of the present invention further includes an extension wire electrically connecting the terminal extension part to the positive electrode terminal or the negative electrode terminal, and the extension wire is covered by the terminal body part.

For example, the terminal body part is made of an insulating resin material, and the positive electrode terminal or the negative electrode terminal is not activated by the terminal body part.

In an exemplary embodiment, the terminal body part is coupled to the upper surface of the battery case and the one or more side surfaces connected to the upper surface of the battery case; and the terminal extension part is exposed at the one or more side surfaces connected to the upper surface.

Here, the terminal structure is connected to each of the positive electrode terminal and the negative electrode terminal.

Accordingly, the terminal extension part of the terminal structure coupled to the positive electrode terminal is positioned on a first surface and the terminal extension part of the terminal structure coupled to the negative electrode terminal is positioned on a second surface.

In an exemplary embodiment, the first surface is different from the second surface.

For example, the first surface may be adjacent to the second surface, or the first surface may be opposite to the second surface.

In another exemplary embodiment, the first surface and the second surface may be located on a common surface.

For example, the first surface may be separated from the second surface in a vertical direction on the common surface, or the first surface may be separated from the second surface in a horizontal direction on the common surface.

Meanwhile, the secondary battery of the present invention further includes a venting part on a surface of the battery case, wherein the terminal extension part may be positioned on a surface other than the surface comprising the venting part.

For example, the venting part may be positioned between the positive electrode terminal and the negative electrode terminal on the upper surface of the battery case.

In addition, in the secondary battery of the present invention, the terminal structure may be detachable from the battery case.

### [Advantageous Effects]

In a secondary battery having the above configuration, an arrangement of a positive electrode terminal and/or a negative electrode terminal can be easily changed by coupling a terminal structure to an upper surface of the secondary battery, specifically to a corner of an upper surface of the secondary battery. Thereby, a position of a terminal part can be freely controlled without changing an existing manufacturing process of the inside of a cell, thereby reducing the development and production costs of a prismatic secondary battery.

In addition, because a position of a terminal part can be freely controlled, a degree of freedom can be provided to the module/pack manufacturing process.

Also, when a venting part is disposed on the same surface as a surface on which positive and negative electrode terminals are disposed, the positive and negative electrode terminals as well as surrounding secondary batteries and electric devices are damaged by a gas or flame that is ejected when the venting part is broken. In a secondary battery that uses the terminal structure of the present invention, a positive electrode terminal and a negative electrode terminal can be spaced apart from a venting part, thereby preventing damage when the venting part is broken and ensuring safety of the device without having to install a separate gas exhaust inductor or a barrier.

However, the technical effects obtainable through the present invention are not limited to the above-described effects, and other effects that are not described herein will be clearly understood by those skilled in the art from the following descriptions of the present invention.

### [Brief Description of the Drawings]

The accompanying drawings illustrate exemplary embodiments of the present invention and, together with the following detailed description, serve to provide further understanding of the technical spirit of the present invention. However, the present invention is not to be construed as being limited to the drawings.
FIG. 1 is a perspective view of a secondary battery according to the present invention.
FIG. 2 is a perspective view of a coupling structure of the secondary battery and a terminal structure according to the present invention.
FIG. 3 is a view of an exemplary embodiment for a secondary battery of the present invention.
FIG. 4 is a view of another exemplary embodiment for a secondary battery of the present invention.

### [Best Mode for Carrying Out the Invention]

While the present invention may be variously changed and have various embodiments, specific embodiments will be described in detail below.

However, it is to be understood that the present invention is not limited to the specific embodiments described herein but includes all modifications, equivalents, and substitutions included in the spirit and the scope of the present invention.

In this application, it should be understood that terms such as "include" or "have" are intended to indicate the presence of a feature, number, step, operation, component, part, or a combination thereof described on the specification, and they do not preclude the possibility of the presence or addition of one or more other features or numbers, steps, operations, components, parts or combinations thereof.

In addition, in this application, when a portion such as a layer, a film, an area, a plate, and the like are referred to as being "on" another portion, this includes not only the case where the portion is "directly on" another portion but also the case where still another portion is interposed therebetween. On the other hand, when a portion such as a layer, a film, an area, a plate, and the like are referred to as being "under" another portion, this includes not only the case where the portion is "directly under" another portion but also the case where still another portion is interposed therebetween. In addition, to be disposed "on" in the present application may include the case of being disposed at the bottom as well as the top.

As described herein, in the secondary battery including the terminal structure of the present invention, the positions of the positive and negative electrode terminals disposed on a surface of the battery case, including the upper surface, can be freely changed according to the needs of a user by applying the terminal structure to, and without changing the design of, the battery, thereby reducing production costs of the secondary battery.

The secondary battery of the present invention includes: a positive electrode terminal and a negative electrode terminal disposed apart from each other on an upper surface of a battery case; and a terminal structure including a terminal body part and a terminal extension part, wherein the terminal structure covers at least one of the positive electrode terminal and the negative electrode terminal such that the respective positive electrode terminal or the negative electrode terminal is not exposed, wherein the terminal structure is coupled to the upper surface of the battery case and one or more side surfaces connected to the upper surface, and wherein the terminal extension part is electrically connected to the at least one of the positive electrode terminal and the negative electrode terminal, and is exposed at any one or more side surfaces of the terminal body part except the upper surface.

### [Mode for Carrying Out the Invention]

Hereinafter, specific embodiments of a secondary battery of the present invention will be described with reference to the accompanying drawings.

### [First Embodiment]

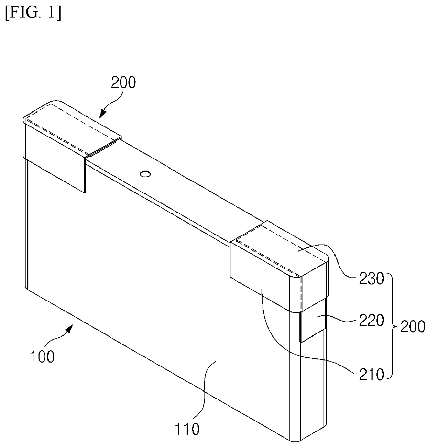

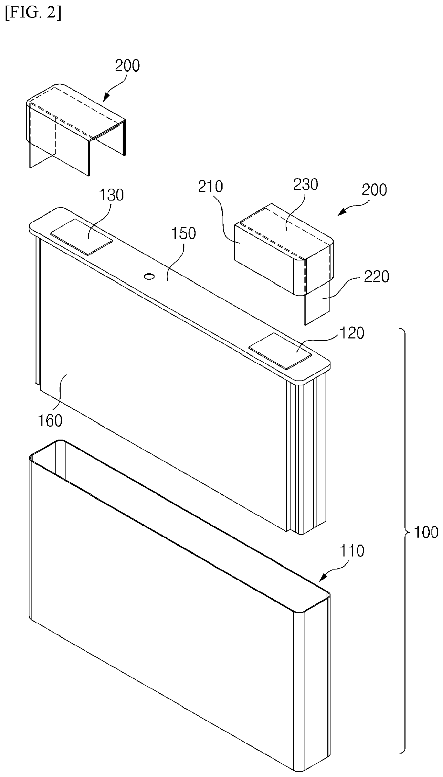

FIG. 1 is a perspective view of a secondary battery 100 according to the present invention, and FIG. 2 is a perspective view of a coupling structure of the secondary battery 100 and a terminal structure 200 according to the present invention.

As illustrated in FIGS. 1 and 2, the present invention relates to the secondary battery 100, and particularly, to a prismatic secondary battery 100 in which a positive electrode terminal 120 and a negative electrode terminal 130 are disposed apart from each other on an upper surface of a battery case 110 having a hexahedral shape. Here, the prismatic secondary battery 100 shown in the drawings is merely an example, and a ratio of a length, a width, and a height thereof may vary. However, for convenience of description, front and rear directions, and up, down, left, and right directions will be referred to with reference to the accompanying drawings. For example, a surface on which the positive electrode terminal 120 and the negative electrode terminal 130 are disposed is referred to as an upper surface, and a surface facing the upper surface is referred to as a lower surface.

The secondary battery 100 of the present invention includes the terminal structure 200. The terminal structure 200 is a hinge-like structure coupled to at least one corner of the upper surface of the battery case 110, and includes a terminal body part 210 and an terminal extension part 220.

The terminal body part 210 refers to a body part of the terminal structure 200 that surrounds the positive electrode terminal 120 or the negative electrode terminal 130 such that the positive electrode terminal 120 or the negative electrode terminal 130, respectively, is not exposed, and is coupled to both the upper surface of the battery case 110 and one or more surfaces (side, or front and rear surfaces, etc.) connected to the upper surface. Although the drawings illustrate an example in which the terminal structure 200 is coupled to each of the positive electrode terminal 120 and the negative electrode terminal 130, according to embodiments, the terminal structure 200 may be coupled to only one of the positive electrode terminal 120 and the negative electrode terminal 130.

The terminal extension part 220 is a connection terminal that is electrically connected to the positive electrode terminal 120 or the negative electrode terminal 130 and is exposed at any one surface of the terminal body part 210 excluding an upper surface thereof. That is, the terminal extension part 220 serves as a new positive electrode terminal 120 or negative electrode terminal 130 positioned on another surface other than the upper surface because the positive electrode terminal 120 or the negative electrode terminal 130 surrounded by the terminal body part 210 is not exposed.

As described above, in the secondary battery 100 of the present invention including the terminal structure 200, the positions of the positive electrode terminal 120 and the negative electrode terminal 130 disposed on the upper surface of the battery case 110 can be freely changed according to the needs of a user by applying the terminal structure 200 to the battery and without having to change the design of the battery. Accordingly, in the present invention, the positions of the positive electrode terminal 120 and the negative electrode terminal 130 can be easily changed using the terminal structure 200 for the prismatic secondary battery 100 having the same form factor, thereby reducing production costs of the secondary battery 100.

In one embodiment of the present invention, the positive electrode terminal 120 or the negative electrode terminal 130 and the terminal extension part 220 are electrically connected through an extension wire 230, and the extension wire 230 is not exposed to the outside of the terminal body part 210. That is, the extension wire 230 is insulated from the outside. For example, the extension wire 230 and the terminal extension part 220 may be embedded in the terminal body part 210 made of an insulating resin material through insert molding or the like. Thus, only the terminal extension part 220 is exposed to the outside, thereby preventing damage or short-circuit of the extension wire 230. For reference, the extension wire 230 and the terminal extension part 220 may be integrally formed or may be provided as separate parts to be coupled to the terminal body part 210.

According to the illustrated embodiment, the terminal body part 210 is coupled to the upper surface of the battery case 110 and one side surface connected to the upper surface, and the terminal extension part 220 is exposed at the one side surface connected to the upper surface. Accordingly, the position of the positive electrode terminal 120 or the negative electrode terminal 130 positioned on the upper surface of the battery case 110 is moved to the side surface through the terminal extension part 220.

In addition, the terminal structure 200 may be coupled to each of the positive electrode terminal 120 and the negative electrode terminal 130, and thus, each of the positive electrode terminal 120 and the negative electrode terminal 130 can be disposed on side surfaces facing each other. That is, each of the positive electrode terminal 120 and the negative electrode terminal 130 disposed together on the upper surface of the battery case 110 can be moved to an adjacent side surface, and thus, the initial prismatic secondary battery 100 designed as a unidirectional secondary battery 100 is changed into a bidirectional secondary battery 100.

Meanwhile, although not shown, the vertical positions of the terminal extension parts 220 of the terminal structures 200 coupled to the positive electrode terminal 120 and the negative electrode terminal 130 may be different from each other. That is, the terminal extension parts 220 on left and right side surfaces may be designed to have bilateral asymmetry, and as described above, the terminal structure 200 can be applied to change an arrangement of the positive electrode terminal 120 and the negative electrode terminal 130 in many different ways in the secondary battery 100 of the present invention.

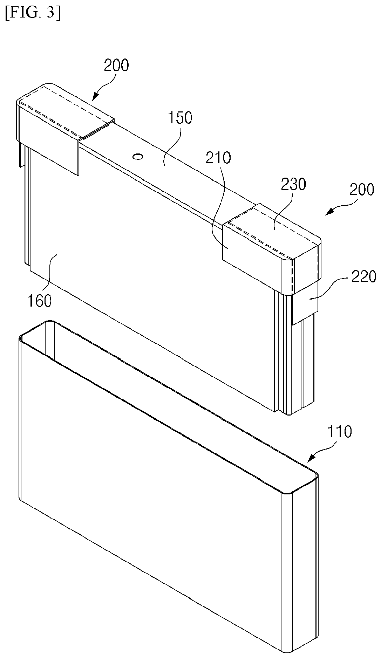

As illustrated in FIGS. 2 and 3, the terminal structure 200 may be manufactured in various ways in which the terminal structure 200 is additionally attached to the completed secondary battery 100, or an electrode assembly 160 is attached to a cap plate 150 constituting the upper surface of the battery case 110, and then the terminal structure 200 coupled before the electrode assembly 160 is encapsulated in the battery case 110.

In addition, although the electrode assembly 160 is described in the illustrated embodiment as being a stack-type assembly, the present invention is not limited thereto, and the illustrated embodiment may be applied to the prismatic secondary battery 100 that accommodates various types of electrode assemblies 160 such as a jelly-roll type electrode assembly.

### [Second Embodiment]

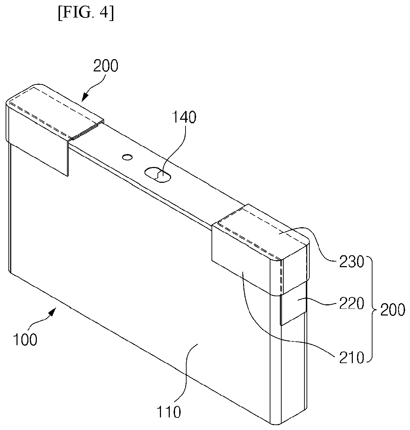

FIG. 4 is a view of a secondary battery 100 according to another exemplary embodiment of the present invention. The second embodiment of FIG. 4 includes the same configuration as described above in the first embodiment, and also includes a venting part 140,
The venting part 140 is a safety component of a battery, whereby when the internal pressure of the secondary battery 100 increases to a certain level or higher, the venting part 140 breaks to discharge gas and prevent explosion of the secondary battery 100. For example, the venting part 140 may be formed through a method of forming a notch having a thickness that is less than the surrounding thickness in a surface of a battery case 110.

In the secondary battery 100 shown in FIG. 4, the venting part 140 is positioned on an upper surface of the battery case 110 on which a positive electrode terminal 120 and a negative electrode terminal 130 are positioned, in particular, between the positive electrode terminal 120 and the negative electrode terminal 130. In this case, when the venting part 140 is broken and internal gas is ejected, the positive electrode terminal 120 and the negative electrode terminal 130 are easily damaged by corrosion, ignition, and the like.

The terminal structure 200 provided in the present invention allows the positive electrode terminal 120 and the negative electrode terminal 130 to be separated from the venting part 140 by being disposed on a different surface from the venting part 140, thereby also contributing to the prevention of damage to the electrode terminals due to gas ejection and flame propagation.

According to the illustrated embodiment, the venting part 140 is provided on one surface, for example, an upper surface of the battery case 110, and a terminal extension part 220 of the terminal structure 200 is provided on a surface other than the surface, for example, a side surface on which the venting part 140 is provided. That is, the venting part 140 and the electrode terminals are physically separated by the terminal structure 200, thereby improving the safety of the secondary battery 100 and actively and quickly responding to various needs of a user.

In the above, the present invention has been described in more detail through the drawings and embodiments. However, the configurations described in the drawings or the embodiments in the specification are merely embodiments of the present invention and do not represent all the technical ideas of the present invention. Thus, it is to be understood that there may be various equivalents and variations in place of the drawings and embodiments described herein at the time of filing the present application.

### [Description of reference numerals]

100: secondary battery
110: battery case
120: positive electrode terminal
130: negative electrode terminal
140: venting part
150: cap plate
160: electrode assembly
200: terminal structure
210: terminal body part
220: terminal extension part
230: extension wire

### Industrial Availability

The present invention is suitable for rechargeable secondary batteries.

## Claims

1. A secondary battery comprising:
a positive electrode terminal and a negative electrode terminal disposed apart from each other on an upper surface of a battery case; and
a terminal structure including a terminal body part and a terminal extension part,
wherein the terminal structure covers at least one of the positive electrode terminal and the negative electrode terminal such that the respective positive electrode terminal or the negative electrode terminal is not exposed,
wherein the terminal structure is coupled to an upper surface of the battery case and one or more side surfaces connected to the upper surface, and
wherein the terminal extension part is electrically connected to the at least one of the positive electrode terminal and the negative electrode terminal, and is exposed at any one or more side surfaces of the terminal body part except the upper surface.

2. The secondary batter of claim 1, wherein the battery case is a hexahedral battery case.

3. The secondary battery of claim 1, further comprising:
an extension wire electrically connecting the terminal extension part to the positive electrode terminal or the negative electrode terminal, and the extension wire is covered by the terminal body part.

4. The secondary battery of claim 1, wherein: the terminal body part is made of an insulating resin material, and
the positive electrode terminal or the negative electrode terminal is not activated by the terminal body part.

5. The secondary battery of claim 1, wherein:
the terminal body part is coupled to the upper surface of the battery case and the one or more side surfaces connected to the upper surface of the battery case; and
the terminal extension part is exposed at the one or more side surfaces connected to the upper surface.

6. The secondary battery of claim 5, wherein the terminal structure is connected to each of the positive electrode terminal and the negative electrode terminal.

7. The secondary battery of claim 6, wherein the terminal extension part of the terminal structure coupled to the positive electrode terminal is positioned on a first surface and the terminal extension part of the terminal structure coupled to the negative electrode terminal is positioned on a second surface.

8. The secondary battery of claim 7, wherein the first surface is different from the second surface.

9. The secondary battery of claim 8, wherein the first surface is adjacent to the second surface.

10. The secondary battery of claim 8, wherein the first surface is opposite to the second surface.

11. The secondary battery of claim 7, wherein the first surface and the second surface are located on a common surface.

12. The secondary battery of claim 11, wherein the first surface is separated from the second surface in a vertical direction on the common surface.

13. The secondary battery of claim 11, wherein the first surface is separated from the second surface in a horizontal direction on the common surface.

14. The secondary battery of claim 1, further comprising:
a venting part on a surface of the battery case,
wherein the terminal extension part is positioned on a surface other than the surface comprising the venting part.

15. The secondary battery of claim 14, wherein the venting part is positioned between the positive electrode terminal and the negative electrode terminal on the upper surface of the battery case.

16. The secondary battery of claim 1, wherein the terminal structure is detachable from the battery case.
